# FASCICULE DE BREVET EUROPEEN

(11) **EP 1 062 022 B1**
(45) Date de publication et mention de la délivrance du brevet: **09.10.2002**
(21) Numéro de dépôt: 99939170.9
(22) Date de dépôt: 04.03.1999
(51) Int. Cl.: B01D 53/04, B01J 20/18, C01B 39/22

(54) **DECARBONATATION DE FLUX GAZEUX AU MOYEN D'ADSORBANTS ZEOLITIQUES**
ENTKARBONISIERUNG VON GASEN UNTER VERWENDUNG VON ZEOLITHISCHEN ADSORPTIONSMITTELN
DECARBONATING GAS STREAMS USING ZEOLITE ADSORBENTS

(30) Priorité: 09.03.1998 FR 9802819
(43) Date de publication de la demande: 27.12.2000
(73) Titulaire: CECA S.A., 92800 Puteaux (Hauts de Seine) (FR)
(72) Inventeur: PLEE, Dominique, F-64140 Lons (FR)
(74) Mandataire: Treuil, Claude
(86) Numéro de dépôt international: FR9900497
(87) Numéro de publication internationale: WO99046031

(56) Documents cités:
- EP-A- 0 173 501
- EP-A- 0 294 588
- EP-A- 0 718 024
- US-A- 2 882 244

## Description

### DOMAINE TECHNIQUE

L'invention a trait à la purification de flux gazeux pollués par du dioxyde de carbone, en particulier, à la purification de l'air avant les étapes de séparation N₂/O₂.

### TECHNIQUE ANTERIEURE

La production de gaz purs, en particulier N₂ et O₂ à partir de l'air atmosphérique est une opération industrielle pratiquée à grande échelle et peut faire appel, soit à des procédés cryogéniques, soit à des procédés d'adsorption basés sur le principe de l'adsorption modulée en pression (PSA, mis pour pressure swing adsorption), celui de l'adsorption modulée en température (TSA mis pour temperature swing adsorption) ou une combinaison des deux (PTSA). De plus, de nombreux gaz issus de procédés industriels contiennent des quantités importantes de dioxyde de carbone qu'il convient souvent d'épurer.

La production de N₂ ou O₂ à partir d'air impose une purification préalable à l'étape proprement dite de séparation. En effet, dans la conduite des procédés cryogéniques, l'eau ou le dioxyde de carbone présents dans l'air d'alimentation peuvent engendrer des bouchages dans les équipements du fait que ces opérations sont menées à des températures très inférieures aux températures de congélation de ces impuretés. Dans les procédés par adsorption, l'eau et le dioxyde de carbone sont plus fortement adsorbés que l'azote et provoquent à la longue un empoisonnement de l'adsorbant, ayant pour conséquence une diminution de la durée de vie espérée.

Dans ces procédés, on emploie très généralement une zéolite de type faujasite (13X dont le rapport Si/Al est supérieur à 1,2) pour assurer l'élimination du dioxyde de carbone, le piégeage de l'eau étant en général effectué sur lit d'alumine placé en amont du lit de tamis moléculaire. La régénération est de type PTSA, c'est-à-dire que l'on associe une légère élévation de température vers 150°C à une diminution de pression. Par ces moyens, le gaz arrivant sur celui-ci n'est constitué que de N₂ et O₂ avec environ 1 % en volume d'argon dont le comportement en adsorption peut être assimilé à celui de l'oxygène.

Il est connu depuis longtemps que la zéolite X est un adsorbant pour le dioxyde de carbone supérieur au gel de silice ou au charbon actif (US Patent n°2,882,244). Ce brevet enseigne également que la sélectivité vis-à-vis de divers adsorbats varie avec la température et la pression.

US Patent 3,885,927 (27.05.75) enseigne que l'adsorption de CO₂ peut être effectuée sur une zéolite X échangée à plus de 90 % par du baryum : dans ces conditions, la teneur en CO₂ du gaz ne dépasse pas 1 000 ppm et la température peut être comprise entre - 40°C et 50°C.

La demande européenne No. 88107209.4 (05.05.88) enseigne que l'on peut également utiliser une zéolite X échangée au strontium pour effectuer cette épuration.

L'influence en adsorption de CO₂ du nombre de cations échangeables sur la zéolite a été étudiée par BARRER et al. dans "MOLECULAR SIEVES" (Soc. Chim. Ind., LONDON, 1968), p. 233 ainsi que par COUGHLAN et al. dans "J.C.S. Faraday", 1, 1975, 71, 1809. Ces études montrent que la capacité d'adsorption de la zéolite pour le CO₂ augmente au fur et à mesure que le rapport Si/Al diminue jusqu'à une limite de 1,2, le domaine inférieur n'ayant pas été exploré.

La zéolite X dont le rapport Si/Al est proche de 1,25 et qui est couramment utilisée est très sélective pour le CO₂ et ce d'autant plus que la température s'abaisse. A des températures voisines de celles de l'ambiante, l'efficacité diminue fortement du fait de la compétition avec l'azote qui est présent en proportions molaires bien supérieures. Le rapport N₂/CO₂ dans l'air ambiant (avec CO₂ ∼ 300 / 400 vpm) est de l'ordre de 3 000. Il est donc généralement indispensable d'équiper l'étage de décarbonatation d'un système de réfrigération de façon à éviter la hausse des températures à l'adsorption, hausse qui peut être importante (plusieurs dizaines de degrés) à cause des fortes chaleurs d'adsorption impliquées.

Dans US Patent n°5,531,808 (02.07.96), on trouve l'enseignement que l'on peut adsorber le CO₂ très efficacement au moyen d'une zéolite de type X ayant un rapport Si/Al inférieur à 1,15. L'avantage par rapport à la zéolite X "classique" réside dans le fait qu'il n'est plus nécessaire de diminuer la température à l'étape de décarbonatation au moyen d'un groupe froid car l'efficacité de la zéolite est telle que la sélectivité pour le CO₂ par rapport à l'azote reste grande même jusqu'à 50°C.

On constate que la capacité d'adsorption de CO₂ d'une zéolite NaLSX s'accroît avec le taux d'échange en sodium. Mais on constate aussi que le gain d'efficacité commence à plafonner quand on atteint des taux d'échange de l'ordre de 90%, si bien qu'il n'y a apparemment plus aucun intérêt à pousser l'échange au delà que 95%. On vient de constater que cela n'est vrai que pour le travail sous des pressions partielles de CO₂ relativement élevées : un gain très sensible d'efficacité peut être obtenu pour la décarbonatation sous des pressions partielles faibles de CO₂ de l'ordre de 2 mbars avec les zéolites LSX dont le taux d'échange en sodium (défini comme le rapport molaire entre les ions sodium et les atomes d'aluminium en position tétraédrique, le reste étant du potassium) est d'au moins 98 %.

### EXPOSE DE L'INVENTION

L'invention concerne ainsi un procédé de décarbonatation de flux gazeux, et notamment d'air, qui consiste à mettre ledit flux gazeux en contact avec un adsorbant zéolitique de type NaLSX, l'adsorbant étant constitué d'une zéolite X avec un rapport Si/Al de 1 à 1,15, dont le taux d'échange sodique est au moins de 98 %, le reste de la capacité d'échange étant occupé par des ions potassium, agglomérée avec un liant et dont le taux de liant résiduel inerte de l'adsorbant est inférieur à 20 % en poids et de préférence tout au plus égal à 5 % en poids.

Dans les installations industrielles, l'utilisation d'adsorbants zéolitiques sous forme d'agglomérats s'avère nettement plus avantageuse que l'utilisation de poudres ; en effet, lors de la manipulation de poudres par exemple au cours des phases de chargement et de déchargement des lits d'adsorbants, des pertes parfois importantes de matière pulvérulente sont difficilement évitables, dues notamment à la volatilité des poudres, ce qui est peu économique pour l'exploitant industriel.

En revanche, les agglomérats de poudres, tels que des granulés, billes, plaquettes, etc. ne présentent pas de tels inconvénients.

Les agglomérats de zéolite à taux de liant supérieur à 5 % en poids peuvent être obtenus de façon conventionnelle par mélange d'une poudre cristalline de zéolite avec de l'eau et un liant (le plus souvent sous forme de poudre), puis par pulvérisation de ce mélange sur des agglomérats de zéolite jouant le rôle de germes d'agglomération. Pendant la pulvérisation, les agglomérats de zéolite peuvent être soumis à une rotation continue sur eux-mêmes selon une technique de type "boule de neige", par exemple dans un réacteur muni d'un axe de rotation. Les agglomérats ainsi obtenus se présentent alors sous forme de billes.

Une fois formés, les agglomérats subissent une cuisson à des températures en général comprises entre 500 et 700 °C et de préférence voisines de 600 °C. A titre d'exemple de liant, on peut citer le kaolin, la silice et l'alumine.

Les agglomérats préférés contiennent moins de 5 % en poids de liant. Un procédé d'obtention de ces agglomérats à faible taux de liant consiste à convertir le liant des agglomérats décrits ci-dessus en phase zéolitique. Pour cela, on commence par agglomérer une poudre de zéolite LSX avec un liant zéolitisable (par exemple kaolin ou métakaolin), puis on zéolitise par macération alcaline par exemple selon le procédé décrit dans la demande française No. 97 09283, puis on échange au sodium sur granulé zéolitisé. On peut ainsi aisément obtenir selon l'invention des granulés titrant au moins 95% de zéolite échangée à 98% remarquablement performants.

### MANIERES DE REALISER L'INVENTION

Le procédé de décarbonatation selon l'invention peut être mis en oeuvre par passage du flux gazeux sur un ou plusieurs lits d'adsorbant associés en parallèle ou susceptibles d'enchaîner de façon cyclique étape d'adsorption et étape de désorption (destinée à la régénération de l'adsorbant) ; au stade industriel, on opère préférentiellement selon un procédé par adsorption par variation de pression (PSA) et avantageusement par adsorption par variation de pression et de température (PTSA). Les procédés de type PSA et PTSA impliquent la mise en oeuvre de cycles de pression. Dans une première phase, le lit d'adsorbant assure la séparation du polluant par adsorption de ce constituant ; dans une seconde phase, l'adsorbant est régénéré par abaissement de la pression. A chaque nouveau cycle, il est essentiel que la désorption du polluant soit la plus complète et la plus efficace possible, de façon à retrouver un état régénéré de l'adsorbant identique ou sensiblement identique à chaque nouveau cycle .

La pression partielle du CO₂ présent dans le flux gazeux n'excède en général pas 25 mbars et est de préférence inférieure à 10 mbars.

De façon à purifier en continu le flux gazeux tel que l'air, on dispose en général en parallèle un certain nombre de lits d'adsorbant que l'on soumet en alternance à un cycle d'adsorption avec compression et de désorption avec décompression. Dans les procédés PSA et PTSA, le cycle de traitement auquel est soumis chaque lit comprend les étapes suivantes :
a/ faire passer le flux gazeux pollué dans une zone d'adsorption comprenant le lit d'adsorbant, le lit d'adsorbant assurant la séparation du ou des polluants (ici CO₂) par adsorption
b/ désorber le CO₂ adsorbé par instauration d'un gradient de pression et abaissement progressif de la pression dans ladite zone d'adsorption pour récupérer le CO₂ par l'entrée dans la zone d'adsorption;
c/ remonter en pression ladite zone d'adsorption par introduction d'un courant gazeux pur par la sortie de la zone d'adsorption.

Ainsi, chaque lit est soumis à un cycle de traitement comprenant une phase de production de gaz pur, une seconde phase de décompression et une troisième phase de recompression.

Si le seul polluant à éliminer du flux gazeux est CO₂, un seul lit d'adsorbant, constitué essentiellement par des agglomérats de zéolite NaLSX tels que définis plus haut est placé dans la zone d'adsorption.

S'il y a plusieurs polluants à éliminer, la zone d'adsorption peut alors comprendre plusieurs lits d'adsorbant susceptibles d'adsorber les impuretés ou polluants non désirés. Ainsi, pour éliminer le dioxyde de carbone et l'eau contenus dans l'air, on associera un agent dessicant pour adsorber l'eau tel que l'alumine ou un gel de silice et l'adsorbant de la présente invention.

De façon à optimiser les procédés PSA et PTSA, les phases de décompression et de compression des différents lits d'adsorbant sont synchronisées : il s'avère particulièrement avantageux d'introduire des étapes d'égalisation des pressions entre deux lits d'adsorbant, l'un étant en phase de décompression, l'autre en phase de recompression.

Lors de la mise en oeuvre du procédé selon l'invention, les pressions d'adsorption sont en général comprises entre 0,2 et 20 bars et de préférence entre 1 et 10 bars tandis que les pressions de désorption sont en général comprises entre 0,02 et 5 bars et de préférence entre 0,1 et 2 bars.

Comme pour les procédés de décarbonatation de l'état de la technique, les températures dans la zone d'adsorption sont en général comprises entre 20 et 80 °C, et avantageusement entre 30 et 60 °C ; dans les procédés de décarbonatation de l'état de la technique, les températures de régénération qui sont nécessaires, pour obtenir une régénération suffisante de l'adsorbant sont typiquement de l'ordre de 130 à 170 °C, ce qui nécessite un chauffage de l'adsorbant et augmente le coût de l'installation industrielle.

Par rapport à l'état de la technique, la présente invention offre un avantage supplémentaire substantiel au niveau de la régénération de l'adsorbant dans la mesure où pour obtenir la même performance de l'adsorbant après sa régénération, les températures de régénération à mettre en oeuvre sont comprises entre 100 et 120°C et sont donc bien inférieures à celles pratiquées jusqu'alors.

### Exemples

Dans les exemples présentés, la zéolite est une zéolite LSX, de rapport Si/Al = 1, obtenue selon le mode expérimental suivant.

### a) Préparation de la zéolite LSX

On synthétise une zéolite de type faujasite LSX, de rapport Si/Al = 1, en mélangeant les solutions suivantes :

### Solution A :

On dissout 136 grammes de soude, 73 grammes de potasse (exprimée en pur) dans 280 grammes d'eau. On porte à ébullition entre 100-115°C, puis l'on dissout 78 grammes d'alumine. Une fois la dissolution effectuée, on laisse refroidir et on complète avec de l'eau jusqu'à 570 grammes pour tenir compte de l'eau évaporée.

### Solution B :

On mélange 300 grammes d'eau et 235,3 grammes de silicate de soude (25,5 % en SiO₂ ; 7,75 % en Na₂O) sous légère agitation. On ajoute la solution de silicate dans la solution d'aluminate en environ 2 minutes sous forte agitation au moyen d'une turbine défloculeuse de type RAYNERI tournant à 2500 tours / minute (vitesse périphérique = 3,7 m/s), puis on abandonne le gel formé à 60°C pendant 24 heures sans agitation. Après ce laps de temps, on observe une décantation importante, caractéristique du processus de cristallisation. On opère alors une filtration puis un lavage avec environ 15 ml d'eau par gramme de solide. Celui-ci est ensuite mis à sécher à 80°C en étuve. La composition du gel de synthèse est :

4 Na₂O, 1,3 K₂O, 1 Al₂O₃, 2 SiO₂, 91 H₂O

L'analyse chimique du solide résultant de la synthèse fournit une composition :

0,77 Na₂O, 0,23 K₂O, 2 SiO₂, 1 Al₂O₃

L'analyse par diffraction par rayons X confirme que la poudre formée est constituée de faujasite pratiquement pure, accompagnée de traces de zéolite A dont la teneur est estimée à moins de 2 %. Une mesure de capacité d'adsorption de toluène est effectuée, après calcination à 550°C pendant 2 heures, sous atmosphère inerte : on trouve une capacité adsorbée de 22,5 % à 25°C et sous une pression partielle de 0,5.

L'échange sodique a été pratiqué en plusieurs échanges successifs, avec un rapport liquide/solide (US) de 10 ml/g, avec une solution de chlorure de sodium à 1 mole de NaCI par litre, à 90°C pendant 3 heures, chaque échange étant suivi d'un ou plusieurs lavages intermédiaires. Les capacités d'adsorption de CO₂ sont mesurées après dégazage sous vide à 300°C pendant 16 heures.

### Exemple 1 :

L'adsorbant utilisé est un granulé obtenu comme suit à partir de la poudre LSX décrite plus haut.

On mélange 42,5 grammes (exprimés en équivalent calciné), 7,5 grammes d'une argile fibreuse (exprimés en équivalent calciné), 1 gramme de carboxyméthylcellulose et l'eau adéquate pour pouvoir procéder à une extrusion sous forme d'extrudés de 1,6 mm de diamètre et d'environ 4 mm de long. Les extrudés sont mis à sécher à 80°C et sont ensuite calcinés à 550°C pendant 2 heures sous atmosphère inerte.

La tableau 1 présente les résultats obtenus en capacité d'adsorption de CO₂ (en cm³/g) à 25°C, sous diverses pressions de CO₂. de granulés de zéolite NaLSX agglomérée avec 15 % de liant et dont le taux d'échange en sodium est variable Ils révèlent sans équivoque l'intérêt d'adsorbant NaLSX à taux d'échange sodique poussé pour la décarbonatation sous faibles pressions partielles

**Tableau 1**

| Taux d'échange en Na | Pression | | |
|---|---|---|---|
| | 2 mbars | 5 mbars | 10 mbars |
| 94,5 % | 25 | 37,2 | 45,5 |
| 97,5 % | 29,2 | 40,3 | 47,8 |
| 99,5 % | 32,5 | 42 | 49 |

On voit clairement que les gains relatifs en capacité sont plus élevés pour les faibles pressions que pour les fortes pressions.

### Exemple 2

L'adsorbant utilisé est un granulé (zéolitisé) obtenu à partir de la poudre de zéolite LSX telle que décrite plus haut.

On utilise la poudre de zéolite LSX de l'exemple 1 en l'agglomérant, avec un mélange d'une argile de type montmorillonite (15 %), d'une argile de type kaolin (85 %), d'un peu de carboxyméthylcellulose et d'eau. L'extrusion achevée, on effectue un séchage à 80°C et une calcination à 500°C pendant 2 heures, sous atmosphère inerte exempte de vapeur d'eau.

On immerge 10 grammes de ces agglomérés dans 17 ml d'une solution de soude à 220 g/l pendant 3 heures à 95°C. Les agglomérés sont ensuite successivement quatre fois lavés par immersion dans de l'eau à raison de 20 ml/g.

On effectue les mesures de capacité d'adsorption de toluène dans les conditions précédemment décrites et l'on trouve les valeurs suivantes :

| | |
|---|---|
| LSX agglomérée (non traitée) | 20,2 % |
| LSX agglomérée (traitée NaOH) | 22,4 % |

Cette valeur d'adsorption de toluène traduit le fait que le corps adsorbant est constitué par plus de 95 % de zéolite. Il s'agit là de résultats qui traduisent la bonne efficacité des corps zéolitiques selon l'invention, et qui reflètent aussi une meilleure cristallinité de la LSX obtenue par zéolitisation à la soude. Le spectre R.M.N. de haute résolution du silicium montre que le rapport Si/Al est égal à 1,01 dans le réseau cristallin.

La tableau 2 présente les résultats obtenus en capacité d'adsorption de CO₂ (en cm³/g) sous diverses pressions partielles de CO₂ pour des granulés de zéolite NaLSX contenant 5 % de liant zéolitisé et dont le taux d'échange en sodium est variable.

**Tableau 2**

| Taux effectif d'échange en Na | Pression | | |
|---|---|---|---|
| | 2 mbars | 5 mbars | 10 mbars |
| 94 % | 30 | 43,4 | 53,5 |
| 97,5 % | 35 | 47 | 56 |
| 99 % | 38,5 | 49 | 58 |

## Revendications

1. Procédé de décarbonatation de flux gazeux, de préférence d'air, pollué par CO_{2,}, **caractérisé en ce qu'**on met en contact dans une zone d'adsorption le flux gazeux à purifier avec au moins un adsorbant essentiellement constitué d'une zéolite de type NaLSX de rapport Si/Al 1 à 1,15, échangée au sodium à un taux égal ou supérieur à 98%, le taux d'échange étant exprimé comme le rappport entre le nombre d'ions sodium et le nombre d'atomes d'aluminium en position tétraédrique, le reste de la capacité d'échange étant occupé par des ions potassium, agglomérée avec un liant, le taux de liant résiduel inerte de l'adsorbant étant inférieur ou égal à 20 % en poids.

2. Procédé selon la revendication 1, dans lequel le taux de liant résiduel inerte de la compositions zéolitique agglomérée est tout au plus égal à 5 % en poids.

3. Procédé selon la revendication 1 ou 2, **caractérisé en ce qu'**on opère par adsorption modulée en pression (PSA) et de préférence par adsorption modulée en pression et en température (PTSA).

4. Procédé selon l'une quelconque des revendications 1 à 4, dans lequel la zéolite X a un rapport Si/Al de 1.

5. Procédé selon l'une quelconque des revendications 1 à 4, dans lequel les pressions en adsorption sont comprises entre 1 et 10 bars et les pressions de désorption entre 0,1 et 2 bars.

6. Procédé selon l'une quelconque des revendications 1 à 5, **caractérisé en ce qu'**il comprend la mise en oeuvre d'un cycle de traitement comprenant les étapes :
a/ faire passer le flux gazeux pollué dans une zone d'adsorption comprenant le lit d'adsorbant, le lit d'adsorbant assurant la séparation du ou des polluants par adsorption
b/ désorber le CO₂ adsorbé par instauration d'un gradient de pression et abaissement progressif de la pression dans ladite zone d'adsorption pour récupérer le CO₂ par l'entrée dans la zone d'adsorption;
c/ remonter en pression ladite zone d'adsorption par introduction d'un courant gazeux pur par la sortie de la zone d'adsorption.

7. Procédé selon la revendication 6, dans lequel l'adsorbant est régénéré à une température comprise entre 100 et 120 °C.

8. Procédé de purification d'air pollué par CO₂ et H₂O **caractérisé en ce qu'**on met en contact dans une zone d'adsorption le flux gazeux à purifier avec au moins un agent dessicant, de préférence à base d'alumine, et au moins avec un adsorbant essentiellement constitué d'une zéolite de type NaLSX de rapport Si/Al 1 à 1,15, échangée au sodium à un taux égal ou supérieur à 98%, le taux d'échange étant exprimé comme le rappport entre le nombre d'ions sodium et le nombre d'atomes d'aluminium en position tétraédrique, le reste de la capacité d'échange étant occupé par des ions potassium, agglomérée avec un liant, le taux de liant résiduel inerte de l'adsorbant étant inférieur ou égal à 20 % en poids.

9. Procédé selon la revendication 8 **caractérisé en ce qu'**il comprend la mise en oeuvre d'un cycle de traitement comprenant les étapes:
a/ faire passer le flux gazeux pollué dans une zone d'adsorption comprenant un lit d'agent dessicant et un lit d'adsorbant tel que défini à la revendication 1,
b/ désorber le CO₂ et adsorbé par instauration d'un gradient de pression et abaissement progressif de la pression dans ladite zone d'adsorption pour récupérer le CO₂ par l'entrée dans la zone d'adsorption;
c/ remonter en pression ladite zone d'adsorption par introduction d'un courant gazeux pur par la sortie de la zone d'adsorption.

## Patentansprüche

1. Verfahren zur Entfernung von Kohlendioxid aus einem Gasstrom, vorzugsweise Luft, der mit CO₂ verunreinigt ist, **dadurch gekennzeichnet, daß** der zu reinigende Gasstrom in einer Adsorptionszone mit mindestens einem Adsorbens in Kontakt gebracht wird, das im wesentlichen aus einem Zeolith vom Typ NaLSX mit einem Verhältnis Si/Al im Bereich von 1 bis 1,15 besteht, der zu mindestens 98 % mit Natrium getauscht ist, wobei der Austauschgrad als Verhältnis der Anzahl der Natriumionen und der Anzahl der Aluminiumatome in tetraedrischer Koordination ausgedrückt ist, wobei die übrige Austauschkapazität von Kaliumionen besetzt wird, und der mit einem Bindemittel agglomeriert ist, wobei der Gehalt des restlichen inerten Bindemittels des Adsorbens 20 Gew.-% beträgt oder darunter liegt.

2. Verfahren nach Anspruch 1, wobei der Gehalt des restlichen inerten Bindemittels der agglomerierten Zeolithzusammensetzung höchstens 5 Gew.-% beträgt.

3. Verfahren nach Anspruch 1 oder 2, **dadurch gekennzeichnet, daß** eine Druckwechseladsorption (PSA) und vorzugsweise eine Druckund Temperaturwechseladsorption (PTSA) durchgeführt wird.

4. Verfahren nach einem der Ansprüche 1 bis 4, wobei der Zeolith X ein Si/Al-Verhältnis von 1 aufweist.

5. Verfahren nach einem der Ansprüche 1 bis 4, wobei die Drücke bei der Adsorption im Bereich von 1 bis 10 bar und die Drücke bei der Desorption im Bereich von 0,1 bis 2 bar liegen.

6. Verfahren nach einem der Ansprüche 1 bis 5, **dadurch gekennzeichnet, daß** ein Behandlungszyklus mit den folgenden Schritten durchgeführt wird:
a) Hindurchleiten des verunreinigten Gasstroms durch eine Adsorptionszone, die ein Adsorbensbett umfaßt, wobei das Adsorbensbett die Antrennung der Verunreinigung(en) durch Adsorption sicherstellt,
b) Desorption des adsorbierten CO₂ durch Einstellen eines Druckgradienten und allmähliches Absenken des Drucks in der Adsorptionszone, um das CO₂ am Einlaß der Adsorptionszone rückzugewinnen;
c) Druckerhöhung in der Adsorptionszone durch Einleiten eines reinen Gasstroms über den Auslaß der Adsorptionszone.

7. Verfahren nach Anspruch 6, wobei das Adsorbens bei einer Temperatur im Bereich von 100 bis 120 °C regeneriert wird.

8. Verfahren zur Reinigung von mit CO₂ und H₂O verunreinigter Luft, **dadurch gekennzeichnet, daß** der zu reinigende Gasstrom in einer Adsorptionszone mit mindestens einem Trockenmittel vorzugsweise auf der Basis von Aluminiumoxid und mit mindestens einem Adsorbens in Kontakt gebracht wird, das im wesentlichen aus einem Zeolith vom Typ NaLSX mit einem Verhältnis Si/Al im Bereich von 1 bis 1,15 besteht, der zu mindestens 98 % mit Natrium getauscht ist, wobei der Austauschgrad als Verhältnis der Anzahl der Natriumionen und der Anzahl der Aluminiumatome in tetraedrischer Koordination ausgedrückt ist, wobei die übrige Austauschkapazität von Kaliumionen besetzt wird, und der mit einem Bindemittel agglomeriert ist, wobei der Gehalt des restlichen inerten Bindemittels des Adsorbens 20 Gew.-% beträgt oder darunter liegt.

9. Verfahren nach Anspruch 8, **dadurch gekennzeichnet, daß** ein Behandlungszyklus mit den folgenden Schritten durchgeführt wird
a) Hindurchleiten des verunreinigten Gasstroms durch eine Adsorptionszone, die ein Trockenmittelbett und ein Adsorbensbett nach Anspruch 1 umfaßt;
b) Desorption des adsorbierten CO₂ durch Einstellen eines Druckgradienten und allmähliches Absenken des Drucks in der Adsorptionszone, um das CO₂ am Einlaß der Adsorptionszone rückzugewinnen; und
c) Druckerhöhung in der Adsorptionszone durch Einleiten eines reinen Gasstroms über den Auslaß der Adsorptionszone.

## Claims

1. Process for the decarbonatation of gas flows, preferably air, contaminated with CO₂, **characterized in that** the gas flow to be purified is placed in contact, in an adsorption zone, with at least one adsorbent consisting essentially of a zeolite of NaLSX type with an Si/Al ratio of 1 to 1.15, exchanged with sodium to a degree of greater than or equal to 98%, the degree of exchange being expressed as the ratio between the number of sodium ions and the number of aluminium atoms in a tetrahedral position, the remainder of the exchange capacity being occupied by potassium ions, agglomerated with a binder, the content of residual inert binder in the adsorbent being less than or equal to 20% by weight.

2. Process according to Claim 1, in which the content of residual inert binder in the agglomerated zeolite composition is not more than 5% by weight.

3. Process according to Claim 1 or 2, **characterized in that** it is performed by pressure swing adsorption (PSA) and preferably by pressure temperature swing adsorption (PTSA).

4. Process according to any one of Claims 1 to 4, in which the zeolite X has an Si/Al ratio of 1.

5. Process according to any one of Claims 1 to 4, in which the adsorption pressures are between 1 and 10 bar and the desorption pressures are between 0.1 and 2 bar.

6. Process according to any one of Claims 1 to 5, **characterized in that** it comprises carrying out a treatment cycle comprising the steps:
a) passing the contaminated gas flow into an adsorption zone comprising the adsorbent bed, the adsorbent bed ensuring separation of the contaminant(s) by adsorption,
b) desorbing the adsorbed CO₂ by establishing a pressure gradient and gradually lowering the pressure in the said adsorption zone in order to recover the CO₂ at the adsorption zone inlet;
c) raising the pressure of the said adsorption zone by introducing a stream of pure gas via the adsorption zone outlet.

7. Process according to Claim 6, in which the adsorbent is regenerated at a temperature of between 100 and 120°C.

8. Process for purifying air contaminated with CO₂ and H₂O, **characterized in that** the gas flow to be purified is placed in contact, in an adsorption zone, with at least one drying agent, preferably based on alumina, and at least with an adsorbent consisting essentially of a zeolite of NaLSX type with an Si/Al ratio of 1 to 1.15, exchanged with sodium to a degree of greater than or equal to 98%, the degree of exchange being expressed as the ratio between the number of sodium ions and the number of aluminium atoms in a tetrahedral position, the remainder of the exchange capacity being occupied by potassium ions, agglomerated with a binder, the content of residual inert binder in the adsorbent being less than or equal to 20% by weight.

9. Process according to Claim 8, **characterized in that** it comprises carrying out a treatment cycle comprising the steps:
a) passing the contaminated gas flow into an adsorption zone comprising a drying-agent bed and an adsorbent bed, as defined in Claim 1,
b) desorbing the adsorbed CO₂ by establishing a pressure gradient and gradually lowering the pressure in the said adsorption zone in order to recover the CO₂ at the adsorption zone inlet;
c) raising the pressure of the said adsorption zone by introducing a stream of pure gas via the adsorption zone outlet.
